Europäisches Patentamt

European Patent Office

Office européen des brevets

(11) Publication number: **0 153 503**
**B1**

# (12) EUROPEAN PATENT SPECIFICATION

(45) Date of publication of patent specification: **23.12.87**

(51) Int. Cl.⁴: **B 60 T 17/00**

(21) Application number: **84200226.3**

(22) Date of filing: **17.02.84**

(54) Automatic draining device for air-operated systems.

(30) Priority: **10.02.84 ES 277344 u**

(43) Date of publication of application:
**04.09.85 Bulletin 85/36**

(45) Publication of the grant of the patent:
**23.12.87 Bulletin 87/52**

(84) Designated Contracting States:
**AT BE CH DE FR GB IT LI NL SE**

(56) References cited:
**DE-A-3 211 662**
**US-A-3 533 433**
**US-A-3 580 267**

(73) Proprietor: **VALVULAS LAC S.A.**
**Santa Margarita s/m Pol.Ind. Santa Margarita**
**Terrassa (Barcelona) (ES)**

(72) Inventor: **Lopez Linan, Antonio**
**51 Av. Abad Marcet,**
**Terrassa (Barcelona) (ES)**

(74) Representative: **Reynvaan, Lambertus**
**Johannes, Ir. et al**
**EXTERPATENT Willem Witsenplein 4**
**NL-2596 BK 's-Gravenhage (NL)**

Courier Press, Leamington Spa, England.

## Description

The present invention relates to an automatic draining device for air-operated systems, especially for vehicle air brakes, comprising a mounting block adapted to be connected to a reservoir of the air-operated system, a condensation chamber communicating with the system via a conduit, and a condensate discharge chamber communicating with a discharge conduit, a drain valve disposed between both chambers, and drain valve actuating means for opening the drain valve, said actuating means having a working chamber which is in communication with the air-operated system via a passage.

Such a draining device is known from US—A—3,580,267. In said known device the working chamber of the actuating means is connected to an outlet of exhaust air of the braking system. In this arrangement the functioning of the draining device depends upon the braking rhythm. The above reference also discloses an embodiment of the draining device in which the actuating means are directly activated by an electromagnet the control of which may be located remote from the draining device. In the latter embodiment the pressure of the system is not used for activating the actuating means.

From US—A—3,533,433 an automatic draining device is known in which the drain valve is actuated responsive to pressure variation in the reservoir of the air-operated system. A safety valve is arranged between the drain valve and the reservoir to prevent a loss of pressure below safe levels. If desired the drain valve may manually be activated by means of a button carrying a valve release pin.

An object of the invention is to provide an automatic draining device for air-operated systems, which makes use of the pressure in the system but functions independently of pressure variations in said system and can be controlled remote from the system.

Another object of the invention is to provide a draining device in which the drain valve is automatically closed after a period of time.

According to the invention the above objects are achieved by the characterizing features of claim 1.

By means of the remote control of the servo valve the actuating means can be activated at any desired moment independent of the braking rhythm. The calibrated opening in the actuating piston causes after some time a pressure compensation over the actuator piston and ensures the closing of the drain valve even if the servo valve remains opened. This arrangement provides an additional safety for an unintended pressure loss in the system.

The subclaims 2—6 disclose further improvements of the teaching of claim 1.

The accompanying drawings show, by way of example not limitative to the scope of the invention and in schematic representation, a preferred embodiment.

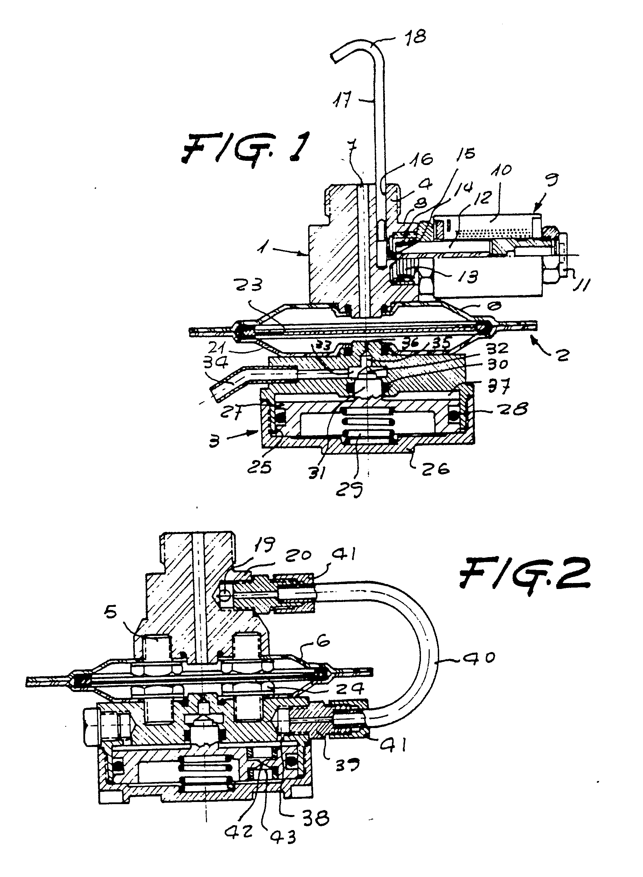

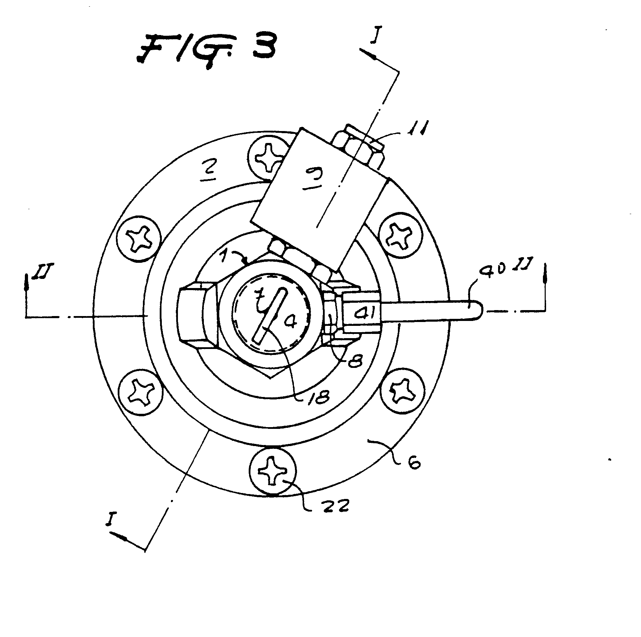

In the drawings, Figure 1 is an axial sectional view of a drain valve according to the present invention taken on line I—I of Figure 3 which shows a top view of the same valve; and Figure 2 is another sectional view of the same valve taken on the line II—II of the said Figure 3.

In the figures, the mounting block, the filter-condensation chamber and the valve-actuator body are respectively indicated by the general reference numerals 1, 2 and 3.

At its upper end, the mounting block 1 is provided with an annular head 4 adapted for fitting the device into the drain hole of one of the reservoirs of the brake system, while, at the other end, it is secured to the upper half 6 of the condensation chamber 2 by means of bolts 5.

Said block is provided, on the one hand, with an axial conduit means 7 which communicates, directly with the inside of the reservoir in which the device is mounted, and with the interior of the condensation chamber, and, on the other hand, with a connection means 8 into which is screwed the body of a solenoid valve 9 whose operating coil 10 is energized at the appropriate moments through flexible conductors entering the device via a cable connector 11.

The valve closing member 12, which is loaded by means of a compression spring 13, abuts against a valve seat 14 formed at the rear end of the connection means, thus forming the chamber 15 of said valve. The inlet means of said valve is formed by a bore 16, communicating with the central opening of the seat 14 and extending to the end of the head 4; said bore has secured thereto, in a press-fit or welded relation, a small pipe 17 which is thus located within the reservoir. In order to ensure that condensate accumulated within the reservoir cannot reach the pipe opening, this pipe extends above a suitable level and has its end bent as seen at 18.

The outlet means of the passage of the solenoid valve herein described is formed by its own valve chamber 15 from which extends a pipe 19 ending in an external connection means 20.

The two halves 6 and 21 of the condensation chamber 2, which are joined together by means of bolts 22, retain therebetween a diaphragm filter 23, and the under half 21 carries the body of the valve-actuator 3 secured thereto by means of bolts 24.

The body 3 forms a short cylinder 25 which is closed off by means of a cover 26 and in which cylinder slides a piston 27 which is sealed in an airtight relation due to a sealing member 28, the piston being urged upwards by a helical spring 29. The head of the cylinder is traversed by a profiled axial boring which communicates with the chamber 2 and comprises, from bottom to top, a guide portion containing a sealing member 30 for a rod 31 projecting from the piston in axial direction and ending in a valve closing member 32; a widened area 33 which forms the chamber for discharging condensate and to this effect communicates with the outside by way of a discharge conduit 34; a bore 35 which forms the valve seat for the closing member 32 and a narrow, calibrated passage 36 allowing the condensate to leave the chamber 2.

As seen in the drawings, the working chamber 37 of the cylinder 25 communicates, via a passage 38, with connection means 39, and a pipe 40, provided with connections 41, connects said connection means with the outlet connection means 20 of the servo-valve.

Finally, the piston 27 is traversed by a bore which has a calibrated opening 42 formed therein, on either side of said opening filters 43 being arranged which automatically bring about the compensation of pressures and ensure the closing of the drain valve, even if the solenoid-valve control means should remain energized.

In operation, when the solenoid-valve is actuated thus opening the seat 14, the compressed air of the reservoir in which the device is mounted, passes via the pipe 17, seat 14, chamber 15, conduit 19 and connection 8, to the external pipe 40 which leads it to the connection 39, from which it passes via the passage 38 to the working chamber 37 in order to move the piston to the discharge position as shown in figures 1 and 2. The rest of the operation is self-evident.

Obviously, the solenoid-valve 9 can be controlled, through appropriate conductors, from an electric switching device located at any convenient place. Without dismissing the possibility of carrying out this operation from a hand-operated contact means connected to the brake-operating circuits, said switching device may be located at any other place in the brake system, for example at the outlet opening of the compressor, or may be replaced by an electric device operated from the electrical installation of the vehicle as a function of some suitable signal related to operation thereof. In any case, it is convenient to install a switch in parallel relation to said switching device to allow the manual operation of the draining device.

## Claims

1. An automatic draining device for air-operated systems specially for vehicle air brakes, comprising a mounting block (1) adapted to be connected to a reservoir of the air-operated system, a condensation chamber (2) communicating with the system via a conduit (7), and a condensate discharge chamber (33) communicating with a discharge conduit (34), a drain-valve (32, 35) disposed between both chambers, and drain-valve actuating means for opening the drain-valve, said actuating means having a working chamber (37) which is in communication with the air-operated system via a passage (16, 19, 40, 38) characterized in that, the passage (16, 19, 40, 38) connects the working chamber (37) to a point in the system which is kept under pressure during its operation and in that a servo-valve (9), preferably an electromagnetically operated valve is disposed in said passage in order to control the valve actuating means, the servo-valve being connected to a remote control device for activating said valve as desired and in that the actuating means comprises an actuating piston (27) which is traversed by a calibrated opening (42) protected on either side by a filter (43).

2. A draining device according to claim 1, characterized in that the servo-valve is a solenoid-valve.

3. A draining device according to claim 1, characterized in that the passage (16, 19, 40, 38) extends into a pipe (17) which extends beyond the connection of the draining device in the bottom of the reservoir and leads to a level not attainable by the condensate accumulated therein.

4. A draining device according to the preceding claims 1—3, characterized in that the remote control device is a switching device controlled by an operating function which is dependent upon the operation of the air-operated system.

5. A draining device according to claim 4, characterized in that the switching device includes, in parallel relation, a manually operated switch for actuating the drain-valve as desired.

## Patentansprüche

1. Automatische Trocknungseinrichtung für luftbetätigte Systeme insbesondere für Fahrzeug-Druckluftbremsen, mit einem Befestigungsblock (1), der zum Anschließen an einen Speicher des luftbetätigten Systems vorgesehen ist, mit einer Kondensationskammer (2), die mit dem System über eine Leitung (7) in Verbindung steht, und mit einer Kondensat-Abzugskammer (33), die mit einer Abzugsleitung (34) verbunden ist, mit einem zwischen beiden Kammern angeordneten Abzugsventil (32, 35) und mit Betätigungseinrichtungen für das Abzugsventil zu dessen Öffnen, wobei die Betätigungseinrichtungen eine Arbeitskammer (37) aufweisen, die mit den luftbetätigten System über eine Durchlaß-Leitung (16, 19, 40, 38) in Verbindung steht, dadurch gekennzeichnet,

daß die Durchlaß-Leitung (16, 19, 40, 38) die Arbeitskammer (37) mit einem Punkt im System verbindet, der während dessen Betrieb unter Druck gehalten wird,

daß ein Servoventil (9), bevorzugt ein elektromagnetisch betätigtes Ventil, in der Durchlaß-Leitung angeordnet ist, um die Ventil-Betätigungseinrichtungen zu steuern, wobei das Servo-Ventil an ein Fernbedienungsgerät zur Betätigung des Ventiles, wenn gewünscht, angeschlossen ist, und

daß die Betätigungseinrichtungen einen Betätigungskolben (27) aufweisen, der von einer geeichten Öffnung (42), die auf jeder Seite von einem Filter (43) abgedeckt ist, durchbrochen wird.

2. Trocknungseinrichtung nach Anspruch 1, dadurch gekennzeichnet, daß das Servo-Ventil ein Magnetventil ist.

3. Trocknungseinrichtung nach Anspruch 1, dadurch gekennzeichnet, daß sich die Durchlaß-Leitung (16, 19, 40, 38) in ein Rohr (17) erstreckt, das über den Anschluß der Trocknungseinrichtung im Boden des Speichers hinausragt und sich bis zu einer Höhe erstreckt, die vom darin gesammelten Kondensat nicht erreichbar ist.

4. Trocknungseinrichtung nach den vorangegangenen Ansprüchen 1—3, dadurch gekennzeichnet, daß das Fernbedienungsgerät eine Schalteinrichtung ist, die von einer Betätigungsfunktion gesteuert wird, die vom Betrieb des luftbetätigten Systems abhängt.

5. Trocknungseinrichtung nach Anspruch 4, dadurch gekennzeichnet, daß die Schalteinrichtung einen parallel geschalteten, handbetriebenen Schalter zur Betätigung der Abzugsventiles nach Wunsch einschließt.

**Revendications**

1. Un dispositif de purge automatique pour systèmes pneumatiques notamment pour freins pneumatiques de véhicules, comprenant un bloc de montage susceptible d'être relié à un réservoir du système pneumatique, une chambre de condensation (2), reliée au système par un conduit (7), et une chambre (33) d'évacuation du condensat reliée à un conduit d'évacuation (34), une valve de purge (32, 35) disposée entre les deux chambres et des moyens d'actionnement pour ouvrir la valve de purge, ces moyens comportant une chambre de travail (37) reliée au système pneumatique par un passage (16, 19, 40, 38) caractérisé en ce que le passage (16, 19, 40, 38) relie la chambre de travail (37) à un point du système maintenu sous pression pendant le fonctionnement du dispositif de purge et en ce qu'une servo-valve (9), de préférence une électrovalve, est disposée dans ce passage afin de commander les moyens d'actionnement de la valve, la servo-valve étant reliée à un dispositif de commande à distance pour actionner ladite valve comme on le désire et en ce que les moyens d'actionnement comprennent un piston d'actionnement (27) traversé par un orifice calibré (42) protégé des deux côtés par un filtre (43).

2. Un dispositif de purge selon la revendication 1, caractérisé en ce que la servo-valve est une électrovalve.

3. Un dispositif de purge selon la revendication 1, caractérisé en ce que le passage (16, 19, 40, 38) se prolonge par un tube (17) s'étendant au delà de la liaison du dispositif de purge dans le fond du réservoir à un niveau inaccessible au condensat accumulé dans le réservoir.

4. Un dispositif de purge selon les revendications précédentes 1 à 3, caractérisé en ce que le dispositif de commande à distance est un dispositif interrupteur commandé par une fonction de service sous la dépendance du fonctionnement du système pneumatique.

5. Un dispositif de purge selon la revendication 4, caractérisé en ce que le dispositif interrupteur comprend, monté en parallèle, un interrupteur manuel pour actionner la valve de purge comme on le désire.

FIG.1

FIG.2

# FIG. 3